# EUROPEAN PATENT APPLICATION

(11) **EP 4 663 539 A1**
(43) Date of publication of application: **17.12.2025**
(21) Application number: 24181958.0
(22) Date of filing: 13.06.2024
(51) Int. Cl.: B64C 9/16, B64D 45/00

(54) **FAILURE DETECTION AND/OR HEALTH MONITORING SYSTEM FOR A HIGH LIFT SYSTEM OF AN AIRCRAFT, AND METHOD**

(71) Applicant: AIRBUS Operations GmbH, 21129 Hamburg (DE)
(72) Inventor: Wojack, Mario, 21129 Hamburg (DE); Thebes, Vasco, 21129 Hamburg (DE)
(74) Representative: Isarpatent

(57) **Abstract**

The invention relates to a failure detection and/or health monitoring system for detecting a failure in a high lift system (13) of an aircraft (1) and/or monitoring the integrity of the high lift system, comprising an interconnecting assembly (37) that includes first and second assembly components. The first assembly component (41) is coupled to a first movable high lift surface (17a; 19a), the second assembly component (43) is coupled to a second movable high lift surface (17b; 19b) and the first and second assembly components are displaceably mounted relative to each other. The interconnecting assembly is configured to enable detection of a relative displacement between the first and second high lift surfaces and comprises a detection arrangement (53) configured to detect a displacement or position value of the first and second assembly components (41, 43) relative to each other. Moreover, a method of detecting failure in and/or monitoring integrity of a high lift system is proposed.

## Description

### TECHNICAL FIELD OF THE INVENTION

The invention relates to a failure detection and/or health monitoring system for detecting a failure in a high lift system of an aircraft and/or monitoring the integrity of the high lift system. Furthermore, the present invention proposes a method of detecting failure in and/or monitoring integrity of a high lift system of an aircraft.

### TECHNICAL BACKGROUND

Aircraft, for instance commercial passenger or freight airplanes, comprising wings that during flight generate lift by the airflow around the airfoil, are typically equipped with devices which are adapted to increase the lift in certain phases of the flight. As the amount of lift force generated is dependent on airspeed, such high lift devices are mostly retracted during cruise flight, but are deployed when the airspeed is comparatively low, in particular during take-off and landing. Such high lift devices and systems have been in use for a long time, and various types and variants of such devices and systems have been proposed over the years.

A conventional, widespread configuration, for example, includes so-called slats as high-lift devices on the wing leading edge, and so-called flaps as high-lift devices on the wing trailing edge. The trailing-edge flaps and leading-edge slats are mounted in a manner that enables these components to be moved in a controlled way relative to a fixed portion of the wing, for deployment and retraction.

High lift devices such as flaps and slats have considerable influence on the effect of the wing and the behaviour of the aircraft. Therefore, considerable effort is made to ensure that these high lift devices can be driven and controlled in a reliable manner at all times during flight. Also, effort has been directed to detecting when during deployment or retraction of such a high lift device, jamming or skewing of a high lift surface such as a flap occurs, in order to warn the pilot and to prevent further movement of the flap that is affected.

A method and an apparatus for detecting skew and asymmetry of an airplane flap are described in US 6,299,108 B1. In order to detect jam and skew situations, a crank and link are used in US 6,299,108 B1 to convert translational motion of the flap, specifically flap carriage motion, into rotary motion that is then detected by a rotary position sensor.

US 2023/0159 183 A1 is concerned with a further jam detection system for a flap of a wing of an aircraft, wherein the jam detection system comprises a linkage that is coupled to the flap and to a support, as well as a sensor which is configured to detect a position of at least a portion of the linkage.

Furthermore, US 2009 / 0 152 064 A1 and DE 10 2006 020 554 A1 describe an interconnecting strut for arranging between adjacent landing flaps of an aircraft. The strut has two strut elements that can be longitudinally displaced relative to each other within a permissible range. On one of the strut elements, two sensors are arranged. To the other one of the strut elements, a transmitter element is connected which is detectable by the sensors. The sensors are capable of identifying if a maximum permissible displacement between the strut elements is exceeded in tractive or compressive direction.

It has been found that, using conventional approaches, it can sometimes be comparatively difficult to monitor proper operation of the high lift system and at the same time ensure that, as far as possible, failure indications are provided to the pilot only in case of an actually occurring malfunction. A reason is that the aircraft wing is a relatively flexible structure and that fluctuating external loads, e.g. due to gusts or a rough taxiway, can lead to fluctuating deviations of a position of a high lift surface from its nominal position. It is desirable that tolerances or margins that are applied to distinguish normal behaviour from faulty operation be defined such that malfunction is reliably detected while false alarm is minimized. This, however, is not always easy to implement. Moreover, the behaviour of a high lift device in this regard usually will not be the same over its entire permissible path or stroke from the fully retracted to the fully deployed position and can vary across flight phases.

Furthermore, if aircraft of different size and weight are envisaged within a single type series, for instance, the loads acting on high lift devices vary due to the variation in weight. This may additionally render the implementation of failure detection and/or health monitoring in high lift systems more complex and may further complicate a proper differentiation between actual failure and uncritical fluctuation.

### SUMMARY OF THE INVENTION

In the light of this background, a problem to be solved by the present invention is to provide an improved way of detecting a failure in a high lift system of an aircraft or monitoring the integrity of such a system or both, which makes it possible to further increase the reliability and/or flexibility of such detection or monitoring.

Preferably, an improved way of such detection or monitoring is to be proposed which can be used in a variety of aircraft types and sizes.

This problem is solved by a failure detection and/or health monitoring system having the features of claim 1 and/or by a method having the features of claim 9.

Accordingly, the invention provides a failure detection and/or health monitoring system for detecting a failure in a high lift system of an aircraft and/or monitoring the integrity of the high lift system, comprising an interconnecting assembly that includes a first assembly component and a second assembly component. The first assembly component is coupled to a first movable high lift surface of the high lift system, the second assembly component is coupled to a second movable high lift surface of the high lift system and the first and second assembly components are displaceably mounted relative to each other. In accordance with the invention, the interconnecting assembly of the failure detection and/or health monitoring system is configured to enable detection of a relative displacement between the first and second high lift surfaces and comprises a detection arrangement configured to detect a displacement or position value of the first and second assembly components relative to each other.

Moreover, the invention proposes a method of detecting failure in and/or monitoring integrity of a high lift system of an aircraft, using an interconnecting assembly that includes a first assembly component coupled to a first movable high lift surface of the high lift system and a second assembly component coupled to a second movable high lift surface of the high lift system, the first and second assembly components being displaceable relative to each other. The method comprises a step of detecting, during movement of the first and/or second high lift surfaces for deployment or retraction thereof, a relative displacement between the first and second movable high lift surfaces by detecting a displacement or position value of the first assembly component relative to the second assembly component.

In particular, the method of the invention may be performed using a failure detection and/or health monitoring system as proposed by the invention.

The invention is based on the idea that detecting an actual displacement or position value which indicates the amount, i.e. distance, by which the first and second assembly components are displaced or positioned relative to each other, instead of detecting whether a fixed permissible displacement is exceeded or not in a manner giving a result that can only be either true or false, makes it possible to much more precisely and flexibly evaluate whether a malfunction occurs or not.

For example, it may be desirable to envisage a type series of aircraft that includes aircraft of different sizes, e.g. for different numbers of passengers. Preferably, these aircraft have many of their components in common, in order to facilitate production, maintenance and use, for instance. As noted above, different weights, for example, may generate differing loads on high lift surfaces such as flaps or slats.

The invention makes it possible to facilitate a reliable identification of a high lift system failure and/or a reliable health monitoring of such a high lift system, by enabling an improved, more precise and more flexible and adaptable detection of values on which such an identification and/or monitoring can be based.

In addition, the invention further increases the reliability of high lift system failure detection and/or integrity monitoring by being able to more precisely take into account events that may lead to a behaviour or state of high lift surfaces that does not fully correspond to a nominal behaviour or state but is not caused by a failure but, instead, by causes that are normal and uncritical during aircraft operation, such as a gust during flight, or a corrugated taxiway surface that may lead to wing oscillation during taxiing. The invention in this manner may contribute to avoiding error messages caused by normal, uncritical events.

Furthermore, the improved failure detection and/or health monitoring with respect to the high lift system may contribute to further improving maintenance procedures.

Monitoring integrity or health of the high lift system is considered herein in particular as monitoring whether the operation of the system is free from a relatively sudden or abrupt failure condition. Yet, it will be understood that in some embodiments of the invention, as described herein below, the invention may be used also to monitor more gradual changes in operational behaviour over time.

Advantageous improvements and developments of the invention are contained in the dependent claims as well as in the description referring to the drawings.

In particular, the first and second assembly components of the interconnecting assembly may be arranged in such a manner as to be slidingly displaceable relative to each other. This may make it possible to implement the relative displaceability in a comparatively simple and precise manner.

According to a development, the interconnecting assembly is configured as an interconnecting strut.

In a development, the first and second high lift surfaces are adjacent high lift surfaces of the high lift system. The interconnecting assembly can in this manner be configured to be space- and weight-saving.

In particular, the detection arrangement enables obtaining an absolute and preferably substantially continuous value as a measurement for the position of the first and second assembly components with respect to each other. Such a detection arrangement makes it possible to detect positional changes through a permissible displacement range and enables a rapid detection also of small changes at intermediate positions, in other words is capable of rapidly responding to intermediate and possibly small displacements.

According to developments of the invention, the first and second high lift surfaces are each configured as a trailing-edge flap or are each configured as a slat.

In a further development, the failure detection and/or health monitoring system is adapted to detect a failure in and/or monitor integrity of a drive load path associated with the first and/or second high lift surface. Further, in particular, the method in a development includes detecting a failure in and/or monitoring integrity of a drive load path associated with the first and/or second high lift surface.

In particular, the detection arrangement may comprise at least one sensor device that is connected to a data processing device.

In accordance with an improvement, the at least one sensor device is connected to the data processing device using a bus. By implementing the connection via a bus, for instance, the connection can be facilitated using relatively slender cabling having small weight. In this improvement, the sensor device may be provided with a bus interface.

Alternatively, it is conceivable to connect the sensor device and the data processing device via an analogue signal interface.

In accordance with a further development, the detection arrangement comprises a linear position sensor. Such a linear position sensor, capable of detecting a displacement or absolute position along a straight path, in particular substantially continuously, is comparatively simple to implement.

According to a development, the method includes evaluating the detected displacement or position value and, on the basis of the evaluation of the detected displacement or position value, generating a signal indicating the presence or absence of a failure case, in particular a failure case of jamming of the first and/or second high lift surface, skew of the first and/or second high lift surface, disconnection in the drive load path associated with the first and/or second high lift surface, and/or freewheeling of a drive unit associated with the first and/or second high lift surface. In this way, appropriate action can subsequently be taken in a variety of different failure cases. For instance, skewing of a high lift surface may result from jamming or from a drive load path failure, including in particular a full or partial loss of driving load along that load path.

In an improvement, the method includes comparing the detected displacement or position value of the first assembly component relative to the second assembly component with a pre-defined nominal value and in particular includes comparing the detected displacement or position value of the first assembly component relative to the second assembly component with a nominal value provided by a pre-defined nominal curve. This makes it possible to take into account a variation of the nominal value, in particular along the stroke of the high lift surfaces.

In a development, the method may include evaluating the displacement or position value by forming a difference of the displacement or position value and the nominal value, and generating a signal indicating a failure if the difference reaches and/or exceeds a threshold value.

In accordance with an improvement, the threshold value varies across the operating stroke of the high lift system, in particular the stroke of the high lift surfaces, and/or with a configuration of the aircraft and/or the method includes adapting the threshold value depending on actual air speed or ground speed and/or the method includes adapting the threshold value depending on an environmental event, for example a gust or a taxiway or runway corrugation. In this manner, the evaluation of the detected measure or value can be adapted to a variation of the mechanical, in particular elastic, behaviour of the high lift surfaces depending on the operational situation of the aircraft. For instance, the evaluation can in this way be specifically adapted to a taxiing phase on the ground, to a take-off phase with deployed high lift surfaces, to climb, to calm cruise flight, to approach or to a landing phase. Using this improvement, the detection of failure and/or integrity monitoring can be rendered even more reliable and precise, and false alarm can be better prevented.

According to a further improvement, the method includes detecting a left-side displacement or position value using a left-side interconnecting assembly connecting high lift surfaces of a left wing of the aircraft, detecting a right-side displacement or position value using a right-side interconnecting assembly connecting high lift surfaces of a right wing of the aircraft, and comparing the left-side and right-side displacement or position values, e.g. including forming and evaluating a difference of left-side and right-side displacement or position values. This improvement contributes to a further increased reliability of the proposed failure detection and/or health monitoring. In particular, the comparison of values detected for corresponding interconnecting assemblies on the left and right wing helps to identify asymmetries in the operational behaviour of the high lift system. A detected asymmetry may e.g. be used to confirm an evaluation result indicating failure, e.g. drive load path failure, resulting e.g. in skew, orjamming. This improvement may also help to avoid or reduce false alarm due to gusts or taxiway/runway bumps.

Further, the interconnecting assembly may in particular comprise mechanical end stops that are configured to limit a relative movement of the first and second assembly components, preferably in both directions of compression and of elongation of the interconnecting assembly. In line with such a development, the interconnecting assembly is capable of creating an alternative load path between the first and second high lift surfaces that contributes to preventing excessive positional and/or orientational deviation of one of these high lift surfaces from a nominal state in case of a failure, e.g. a failure in a drive load path of the affected surface. This helps to prevent further damage that might result from such excessive deviation.

The improvements, developments and implementations of the invention described above may be applied in analogous manner to each of the system and method of the invention.

### BRIEF SUMMARY OF THE DRAWINGS

The present invention is explained in more detail below with reference to the embodiments shown in the schematic figures, wherein:
- Fig. 1: shows a plan view of an exemplary aircraft in which a failure detection and/or health monitoring system according to embodiments of the invention is installed and/or in which a method in accordance with embodiments of the invention is used to detect failure in and/or monitor integrity of a high lift system;
- Fig. 2: shows a schematic detail plan view II of two adjacent trailing-edge flaps of the aircraft of Fig. 1, connected by an interconnecting assembly, in accordance with an embodiment of the invention;
- Fig. 3: shows a detail plan view of an interconnecting assembly, configured as an interconnecting strut, in accordance with an embodiment, along with portions of adjacent trailing edge flaps; and
- Fig. 4: shows a schematic flow diagram illustrating a method in accordance with an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

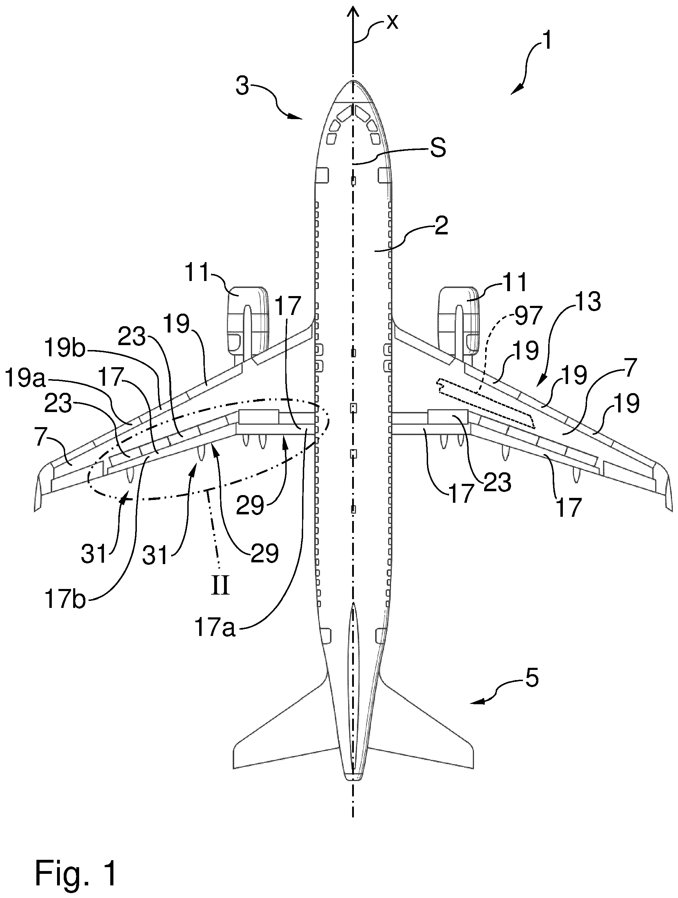

Fig. 1 shows an exemplary aircraft 1, e.g. a commercial passenger aircraft, having a fuselage 2, a nose 3, an empennage 5, wings 7 connected to the fuselage 2, and engines 11 attached to the wings 7. The configuration and shape of the aircraft 1 is substantially symmetric with respect to a vertical plane of symmetry S which contains a longitudinal axis x of the aircraft 1. An arrow indicated by reference numeral x also indicates the flight direction.

The wings 7 are each provided with a plurality of devices for selectively modifying the airflow around the airfoil of the wing 7. More specifically, the aircraft 1 is provided with a high lift system 13 comprising a number of high lift surfaces 17, 19 on each wing 7. These high lift surfaces 17, 19 can be extended and retracted fully or partially and are used in specific flight phases to increase the aerodynamic lift of the wing 7, in particular during take-off and landing.

The high lift system 13 of the aircraft 1 illustrated in Fig. 1 includes two trailing-edge flaps 17 at the trailing edge 29 of each wing 7, and five leading-edge slats 19 at the leading edge of each wing 7, only some of which are designated using a reference numeral in Fig. 1 for greater clarity. The number and configuration of flaps 17 and slats 19 shown in Fig. 1 is, however, exemplary, and greater or smaller numbers of flaps 17 and/or slats 19, and/or flaps 17 and slats 19 of various types, sizes and shapes, are conceivable.

In addition to flaps 17 and slats 19, each wing 7 is provided with spoiler surfaces 23, configured to selectively disturb the airflow, diminish lift and increase drag. Such spoiler surfaces 23 are deployed and used in particular to assist safe braking after landing.

The high lift surfaces 17, 19 are moved relative to a fixed wing structure 97 for deployment or retraction, or for bringing them into pre-defined so-called "gated" intermediate positions, by a dedicated drive arrangement that implements pre-defined system kinematics. The drive arrangement includes a drive unit 60 formed as or comprising an actuator, in particular a geared rotary actuator, and a drive mechanism at each of a plurality of track stations 31. In Fig. 1, as an example, two track stations 31 are associated with each one of the trailing-edge flaps 17.

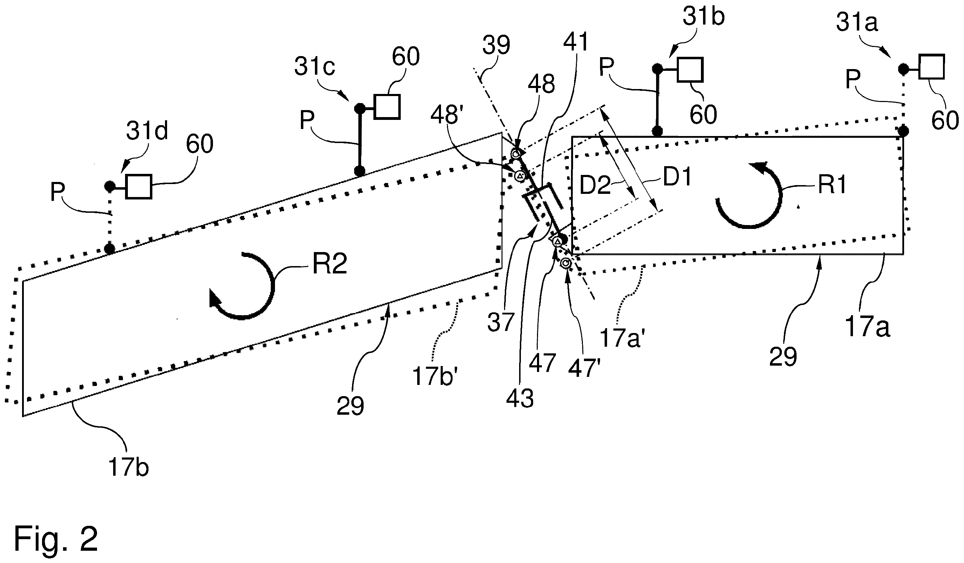

Fig. 2 shows two trailing-edge flaps 17, specifically a first flap 17a and an adjacent second flap 17b, in a schematic more detailed view II as indicated in Fig. 1, in exemplary manner for the left wing 7. With each of the first and second flaps 17a, 17b, two track stations 31 are associated. In particular, the track stations 31a and 31b are associated with the first or inboard flap 17a, and the track stations 31c and 31d are associated with the second or outboard flap 17b. Each of the first and second flaps 17a, 17b is provided with one track station that is configured as a master track capable of supporting side loads.

The drive mechanism at each track station 31a-d may in particular include a track defined on a support structure for the high lift surface, e.g. a track following a straight path, with the flap 17a or 17b being movable relative to the support structure. The geared rotary actuator of the drive unit 60 supplies a driving torque and thereby drives a pivoting motion of a crank. The crank is pivotably connected to and drives a drive mechanism that may include at least one intermediate member. The inboard or outboard flap 17a, 17b is each supported, via an associated main support, on a carriage that is movably guided along the track. The support structure, track, crank, intermediate member(s) and carriage are not shown in the Figures. The mechanism defines a system kinematics along the stroke of the flap 17a, 17b, which defines the movement of the flap 17a, 17b during deployment and retraction.

The movement of the flaps 17a, 17b requires a driving load acting against the air loads experienced by the flaps 17a, 17b. This driving load is supplied by the drive unit 60 along a drive load path P to the flap 17a or 17b, respectively. For each track station 31a-d, the drive unit 60 as well as the drive load path P are schematically indicated in Fig. 2.

It is important that high lift devices such as the flaps 17 and slats 19 can be controlled and driven in a reliable manner at all times during flight, including take-off, climb, cruise, approach and landing.

The high lift surface 17 and its support and drive arrangement are subject to gravity and friction. In case of a non-intact high lift surface drive load path P at one of the track stations 31, in particular a nominal retract position of the high lift surface, e.g. of the flap 17a or 17b, may not be reached at the affected track station 31a, 31b, 31c or 31d. Instead, the high lift surface 17a or 17b in this case may still be slightly extended at that track station 31a, 31b, 31c or 31d. The same applies for other high lift surfaces, e.g. the slats 19, in substantially analogous manner.

In the following, embodiments of a failure detection and/or health monitoring system for detecting a failure in the high lift system 13 of the aircraft 1 and/or for monitoring the integrity of the high lift system 13, as well as of corresponding methods, are described. The failure detection and/or health monitoring systems and methods of the embodiments described herein are based on an evaluation of relative displacements of high lift surfaces and enable the detection of failure cases such as jam, skew, drive load path disconnection, or freewheeling within the drive unit 60, for example. Skewing may be a result of jamming or of drive load path failure.

An embodiment of a failure detection and/or health monitoring system is shown in Fig. 2. The system comprises an interconnecting assembly 37 configured as an interconnecting strut. The interconnecting assembly 37 includes a first, outer assembly component 41 and a second, inner assembly component 43. The first and second components 41, 43 are assembled in such a manner that a portion of the second assembly component 43 can be slidingly displaced within the first assembly component 41 along a longitudinal axis 39 of the interconnecting assembly 37.

One of the first and second assembly components 41, 43 is pivotably coupled to one of first and second movable flaps 17a, 17b, and the other one of the first and second assembly components 41, 43 is pivotably coupled to the other one of the first and second movable flaps 17a, 17b. End regions of the flaps 17a, 17b to which the assembly components 41 and 43, respectively, are coupled, are arranged adjacent to each other.

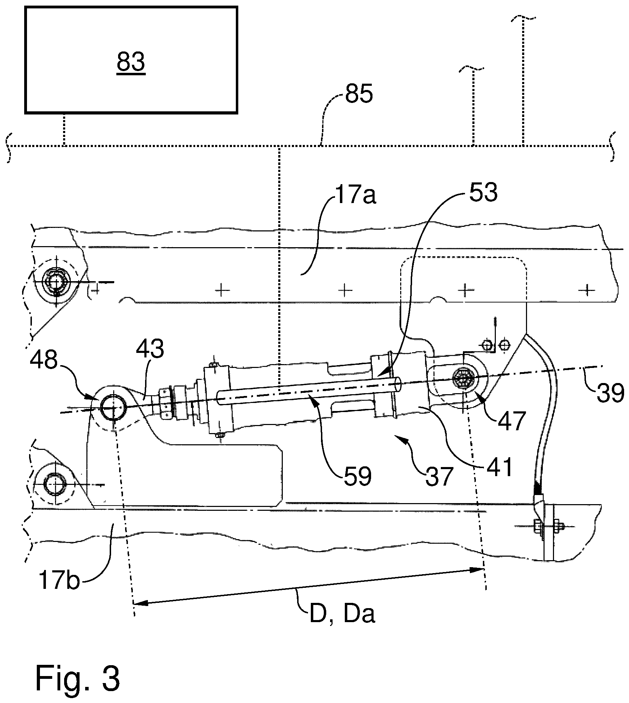

For instance, as illustrated for an embodiment in Fig. 3 in more detail, the first, outer assembly component 41 may be coupled to the first or inboard flap 17a and the second, inner assembly component 43 may be coupled to the second or outboard flap 17b. Yet, as schematically illustrated in Fig. 2, the arrangement may be reversed in other embodiments.

The failure detection and/or health monitoring system according to the embodiments schematically shown in Figs. 2 and 3 comprises a detection arrangement 53 formed with a sensor device configured as a linear position sensor 59 that is connected to a data processing device 83, for example a host computer, preferably using a bus 85. By implementing such a connection using a bus, the routing of connecting cables can be facilitated and relatively slender and lightweight cabling is made possible.

The relative movement of the first and second assembly components 41 and 43 is limited by mechanical end stops of the interconnecting assembly 37. These end stops are not shown in detail in the Figures. The abutment of the first and second assembly components 41 and 43 on each other by the action of the end stops creates a further, alternative load path between the inboard flap 17a and the outboard flap 17b in these end positions. In this way, in case a drive load path P has failed, for example, for one of the flaps 17a, 17b, the interconnecting assembly 37 also is capable of preventing an excessive movement and excessive deviation of the affected flap from its nominal position and/or orientation, thereby avoiding further damage.

For the entire stroke of the assembly components 41, 43 relative to each other permitted by the end stops, or at least for part of that stroke, preferably for a large part, the sensor 59 enables a substantially continuous detection of a displacement or absolute distance between pre-defined points on each the first and second assembly components 41, 43.

In particular, the sensor 59 enables detection of a measure or value that can be used as a numerical measure for the displacement or absolute distance of a first pivot point, defined for instance as a center of a pivotable joint 47 that connects the first assembly component 41 to one of the flaps 17a-b, e.g. the first flap 17a as in Fig. 3, and a second pivot point, defined for instance as a center of a pivotable joint 48 that connects the second assembly component 43 to the other one of the flaps 17a-b, e.g. the second flap 17b, see Fig. 3, relative to each other. Based on the displacement of the assembly components 41 and 43 relative to each other that is detected by the sensor 59, and further based on a distance D between the centers of the pivot joints 47 and 48 for a pre-defined reference state of the flaps 17a and 17b, an actually present absolute distance Da along the longitudinal axis 39 can be calculated. In other variants, the sensor 59 may directly provide an absolute value or measure of the actual distance Da, i.e. an absolute positional value.

Preferably, the linear position sensor 59 is internally arranged within the interconnecting assembly 37 and in this manner is well protected against external influence, water, dirt etc.

The strut-shaped interconnecting assembly 37 is mounted between the first and second flaps 17a and 17b in a diagonal manner and in such a way that during nominal movement of the flaps 17a-b in accordance with the system kinematics, the interconnecting assembly 37 moves in parallel, or almost in parallel, with the flaps 17a and 17b. In other words, if the flaps 17a and 17b perform a movement of deployment or retraction in accordance with the nominal system kinematics, no or only small relative displacement of the first and second assembly components 41, 43 occurs. Thus, elongation or compression of the interconnecting strut 37 is small during movement in accordance with nominal system kinematics.

However, in case of a failure of one of the drive load paths P due to interruption of the path P or at least partial loss of load along that path P, a flap yaw movement R1 or R2 is caused.

For instance, if the drive load path P at track station 31a fails during flap deployment and the driving load at the track station 31a is therefore significantly reduced or fully lost while the drive load path P at the other track station 31b supplies full driving load, a yaw movement R1 of the first flap 17a is caused. The flap 17a is shown in Fig. 2 for the situation of such a failure at track station 31a by a dotted line and designated by reference numeral 17a', indicating an abnormal state of the flap 17a.

Further, for example, if the drive load path P at track station 31d fails during flap deployment and the driving load at the track station 31d is significantly reduced or fully lost while the drive load path P at the other track station 31c supplies full driving load, a yaw movement R2 of the second flap 17b is caused. The flap 17b is shown in Fig. 2 for the situation of such a failure at track station 31d by a dotted line and designated by reference numeral 17b', indicating an abnormal state of the flap 17b.

If the other load paths P function in nominal manner, a load path failure at the track station 31a as in Fig. 2 results in an increased distance D1 between the centers of the pivot joints 47 and 48, and alternatively, a load path failure at the track station 31d instead results in a reduced distance D2 therebetween. Abnormally shifted positions of the pivot joints 47, 48 are illustrated in Fig. 2 in exemplary manner by 47', 48'.

Both situations are illustrated in Fig. 2 using dotted lines. In such failure situations, the flaps 17a and 17b move relative to each other by a distance that is increased compared to normal behaviour, but is limited by the physical end stops of the interconnecting assembly 37. The increased distance D1 thus corresponds to an elongation, the reduced distance D2 to a compression of the interconnecting strut 37.

By detecting a continuous displacement or position using the linear position sensor 59 and obtaining the current distance Da or a current difference ΔDa between Da and the reference distance D, a measure for a relative displacement between the first and second flaps 17a, 17b is detected. The distance Da or the difference ΔDa is used in accordance with the embodiments disclosed herein to monitor integrity of the high lift system 13 and detect failures. In particular, failure in one of the load paths P can be detected and/or the integrity of these load paths P can be monitored. However, further failures cases can be detected as well using the embodiments of the invention described herein, for instance jamming and subsequent non-nominal orientation, or skewing, of the first or second flap 17a, 17b.

In particular, the distance Da or distance difference ΔDa can be compared to a nominal distance Dn or nominal distance difference ΔDn for the present configuration of the high lift system, in particular nominal distance or distance difference pre-defined depending on the degree of retraction or deployment, in other words depending on the position of the flaps 17a, 17b along their stroke. The comparison and evaluation is performed using the data processing device 83.

The system in accordance with each of the embodiments described herein is adapted to inform the pilot about the health status of the drive load paths P, in the sense of integrity of the load paths P, and to inform the pilot in case a failure occurs, and further to arrest at least the affected flaps 17a, 17b, in order to prevent additional damage and fix these high lift surfaces for a safe landing. Also, the information about the failure that is provided may contribute to rapidly arrange for spare parts to be provided and repairs to be carried out once the aircraft 1 has landed. For example, the data processing device 83, e.g. host computer, can be equipped with monitoring software capable of performing the above-described evaluation and further capable of providing information about the health status and/or failures to the pilot and initiate the arresting of the flaps 17a, 17b.

The sensor data, representing a detected displacement or position value, provided by the detection arrangement 53 may be evaluated by the data processing device 83, in particular the host computer, in the following manner:
- A measured displacement relative to a reference, e.g. the reference distance D, or the measured absolute distance, may be compared with a nominal value to identify a discrepancy, which can then be used to identify failure situations like jam, skew, load path disconnection, and/or drive unit failure; skew may result from any of jamming, load path failure or drive unit failure.
- Displacement or positional values measured for left wing and right wing can be compared to detect asymmetry; if significant asymmetry is detected, this may be used to identify or confirm a failure, for example a failure in one of the drive load paths P.

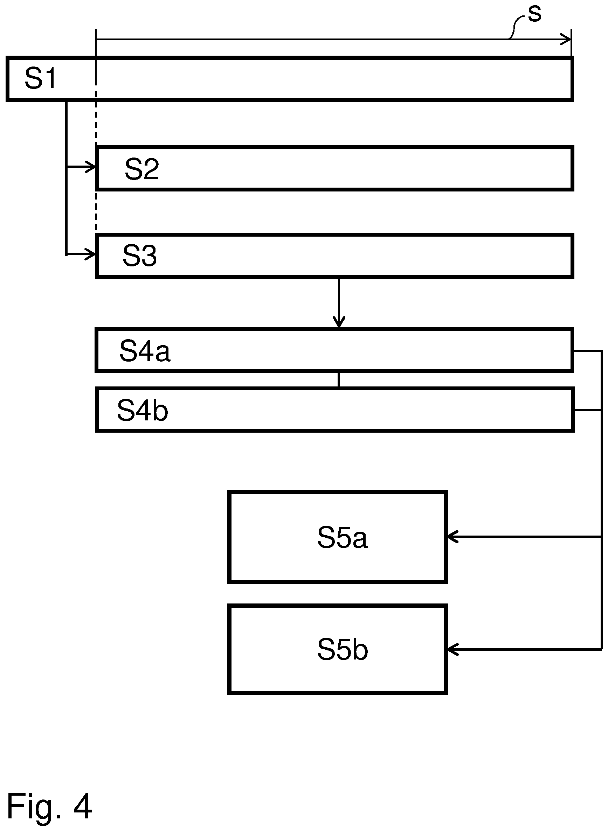

Fig. 4 illustrates various steps of a method of detecting failure in and/or monitoring integrity of the high lift system 13 in accordance with an embodiment in a flow diagram. The method illustrated by Fig. 4 can be carried out using one of the systems described herein above with reference to Figs. 1-3.

In the method of Fig. 4, failure detection and integrity monitoring is performed using the strut-type interconnecting assembly 37 that includes the first assembly component 41 coupled to a first movable high lift surface, e.g. the inboard flap 17a on an outboard side thereof, and a second assembly component 43 coupled to a second movable high lift surface, e.g. the outboard flap 17b on an inboard side thereof. Steps of the method of Fig. 4 are described in detail in the following.

In a step S1, an operation of deployment or retraction of the first and second high lift surfaces, for example the flaps 17a and 17b, is initiated. In Fig. 4, a position along the stroke s e.g. in the sense of a fraction thereof, varying between 0 and 1, is schematically indicated.

During the movement of the high lift surfaces under the action of the drive load supplied by the drive units 60 via the drive loads paths P, the detection arrangement 53 including the position sensor 59 continuously detects, in step S2, a relative displacement of the movable high lift surfaces, for example the first and second flaps 17a and 17b, by continuously detecting a numerical displacement value or absolute numerical positional value of the first assembly component 41 relative to the second assembly component 43. The displacement may be represented in the manner explained above e.g. as a difference ΔDa with respect to a reference distance D, or as an absolute, instantaneous distance Da, for example.

The method includes steps of evaluation of the detected displacement or position value and, on the basis of the result of the evaluation of the detected displacement or position value, generating a signal indicating the presence or absence of a failure case, in particular a drive load path failure case, for instance disconnection in the drive load path P associated with one of the first and/or second high lift surfaces, e.g. the flap 17a or 17b, or freewheeling within one of the drive units 60, or a failure case of jamming, which results in skewing, of the first and/or second high lift surface, e.g. the flap 17a or 17b.

Evaluation of the detected displacement or positional value is performed in step S3 and in one of steps S4a or S4b.

In step S3, the displacement or position value, e.g. represented as Da or ΔDa, is continuously compared with a nominal value Dn or ΔDn. The nominal value Dn or ΔDn is defined by the kinematics of the high lift system 13 including the interconnecting assembly 37 and may in some variants be constant. In particular, however, the nominal value Dn or ΔDn is provided as a nominal curve that takes into account the variation along the stroke of the high lift surfaces. Such a curve may therefore provide Dn or ΔDn depending on s, for example, wherein s indicates a position along the stroke. For instance, s may be defined as or correspond to an angle of an output shaft of the drive unit 60 that varies between an initial and final angle, corresponding to full retraction and full deployment respectively, while the drive unit 60 is activated and drives the high lift surface. In particular, s may be defined as a normalized angle varying between 0 and 1. Thus, the nominal value may be represented as a nominal curve over s as abscissa. In order to perform the comparison, a difference is formed between the detected displacement or position value, e.g. represented as Da or ΔDa, and the constant or varying nominal value, e.g. Dn, Dn(s), ΔDn or ΔDn(s).

The resulting difference, e.g. between Dn and Da or between ΔDn and ΔDa, is continuously compared in a further step S4a or S4b with a threshold value. In step S4a, the threshold value is constant.

Preferably, however, the comparison may be performed instead in accordance with step S4b, which includes continuous comparison of the difference obtained in step S3 with a threshold value that is variable. For example, the threshold value may vary along the stroke s of the high lift surfaces, in this embodiment 17a, 17b, of the high lift system 13. Further, the threshold value may vary across the operating envelope of the aircraft 1. In particular, the threshold may be adapted depending on actual air speed or ground speed and/or depending on an environmental event such as a gust or a taxiway or runway corrugation. For the purpose of adapting the threshold, pre-defined optimal threshold values for various conditions may be provided.

If the difference obtained in step S3 reaches and/or exceeds the threshold value in step S4a or S4b, a signal indicating a failure is generated in step S5a. The signal may be used further to indicate to the pilot that a failure has occured, and to initiate arresting the affected high lift surfaces in order to avoid further movement and subsequent damage.

Additionally or alternatively, if the difference obtained in step S3 does not reach the threshold value in step S4a or S4b, a signal indicating integrity of the portion of the high lift system 13 formed by the high lift surfaces interconnected by the interconnecting assembly 37, for example the flaps 17a and 17b, and particularly integrity of the drive load paths P associated with these high lift surfaces, may be generated in a step S5b.

The method illustrated in Fig. 4 is used to detect a failure in and/or monitor integrity of the drive load paths P associated with the adjacent first and second high lift surfaces, in particular the inboard and outboard flaps 17a and 17b. Moreover, the method of Fig. 4 can also be used to identify further failure cases like jam and skew resulting therefrom.

In further steps, not illustrated in Fig. 4, the method may include detecting displacement or position values in the manner explained above with reference to steps S1, S2 at a left-side interconnecting assembly 37 mounted on the left wing 7 of the aircraft 1 and at a right-side interconnecting assembly 37 of the same type mounted on the right wing 7 of the aircraft 1 at a location corresponding to that of the left-side interconnecting assembly 37, and comparing the displacement or position value obtained from the detection arrangements 53 of each of the left-side and right-side interconnecting assemblies 37, for example by forming a difference. If the difference exceeds an asymmetry-detection threshold, which may be constant or may be variable, an asymmetry can be identified. Identification of such an asymmetry may indicate a failure in a load path P, or a jam and resulting skew, or may be used to confirm a failure identified in step S4a or S4b.

While exemplary embodiments are described herein above with reference to monitoring the operational behaviour of trailing edge flaps 17a, 17b and to detecting failure cases affecting these flaps 17a, 17b, any one of the above-described embodiments is applicable in analogous manner to high lift surfaces embodied as leading edge slats 19, for example. In Fig. 1, two adjacent leading-edge slats 19a and 19b are indicated, to which the embodiments described above may, for instance, be applied.

Further, in the embodiments described herein above, it is conceivable to store and/or evaluate the detected displacement or position value of the first and second assembly components 41, 43 relative to each other over a longer period of time, e.g. over the elapsed service time of the aircraft 1 or part of that service time, in order to additionally monitor more gradual changes of the detected value(s) over time and thus to also perform further health monitoring in that sense, in particular so-called predictive health monitoring.

Even though the invention has been completely described above with reference to embodiments of the invention, the invention is not limited to these embodiments but may be modified in many ways.

### LIST OF REFERENCE SIGNS

- 1: aircraft
- 2: fuselage
- 3: nose
- 5: empennage
- 7: wing
- 11: engine
- 13: high lift system
- 17: trailing-edge flap
- 17a: first high lift surface (flap, nominal state)
- 17a': first high lift surface (flap, abnormal state, beyond tolerance)
- 17b: second high lift surface (flap, nominal state)
- 17b': second high lift surface (flap, abnormal state, beyond tolerance)
- 19: slat
- 19a: first high lift surface (slat)
- 19b: second high lift surface (slat)
- 23: spoiler surface
- 29: trailing edge
- 31: track station
- 31a-31d: track station
- 37: interconnecting assembly
- 39: longitudinal axis
- 41: first assembly component
- 43: second assembly component
- 47, 47': pivotable joint
- 48, 48': pivotable joint
- 53: detection arrangement
- 59: sensor device
- 60: drive unit
- 83: data processing device
- 85: bus
- 97: fixed wing structure
- D: reference distance
- Da: actual distance
- ΔDa: difference between actual and reference distance
- Dn: nominal distance
- ΔDn: difference between nominal and reference distance
- D1: increased distance
- D2: reduced distance
- P: drive load path
- R1: flap yaw movement
- R2: flap yaw movement
- S: plane of symmetry
- S1, S2, S3: step
- S4a, S4b: step
- S5a, S5b: step
- s: fraction of stroke
- x: longitudinal axis

## Claims

1. Failure detection and/or health monitoring system for detecting a failure in a high lift system (13) of an aircraft (1) and/or monitoring the integrity of the high lift system (13), comprising an interconnecting assembly (37) that includes a first assembly component (41) and a second assembly component (43), wherein the first assembly component (41) is coupled to a first movable high lift surface (17a; 19a) of the high lift system (13), the second assembly component (43) is coupled to a second movable high lift surface (17b; 19b) of the high lift system (13) and the first and second assembly components (41, 43) are displaceably mounted relative to each other, wherein the interconnecting assembly (37) is configured to enable detection of a relative displacement between the first and second high lift surfaces (17a, 17b; 19a, 19b) and comprises a detection arrangement (53) configured to detect a displacement or position value of the first and second assembly components (41, 43) relative to each other.

2. Failure detection and/or health monitoring system according to claim 1, **characterized in that** the interconnecting assembly (37) is configured as an interconnecting strut.

3. Failure detection and/or health monitoring system according to claim 1 or 2, **characterized in that** the first and second high lift surfaces (17a, 17b; 19a, 19b) are adjacent high lift surfaces of the high lift system (13).

4. Failure detection and/or health monitoring system according to any one of the preceding claims, **characterized in that** the detection arrangement (53) enables obtaining an absolute and preferably substantially continuous value as a measurement for the position of the first and second assembly components (41, 43) with respect to each other.

5. Failure detection and/or health monitoring system according to any one of the preceding claims, **characterized in that** the first and second high lift surfaces (17a, 17b; 19a, 19b) are each configured as a trailing-edge flap (17, 17a-b) or are each configured as a slat (19, 19a-b).

6. Failure detection and/or health monitoring system according to any one of the preceding claims, **characterized in that** the failure detection and/or health monitoring system is adapted to detect a failure in and/or monitoring integrity of a drive load path (P) associated with the first and/or second high lift surface (17a, 17b; 19a, 19b).

7. Failure detection and/or health monitoring system according to any one of the preceding claims, **characterized in that** the detection arrangement (53) comprises at least one sensor device (59) that is connected to a data processing device (83), preferably using a bus (85).

8. Failure detection and/or health monitoring system according to any one of the preceding claims, **characterized in that** the detection arrangement (53) comprises a linear position sensor (59).

9. Method of detecting failure in and/or monitoring integrity of a high lift system (13) of an aircraft (1), using an interconnecting assembly (37) that includes a first assembly component (41) coupled to a first movable high lift surface (17a; 19a) of the high lift system (13) and a second assembly component (43) coupled to a second movable high lift surface (17b; 19b) of the high lift system (13), the first and second assembly components (41, 43) being displaceable relative to each other, wherein the method comprises a step (S2) of detecting, during movement of the first and/or second high lift surfaces (17a, 17b; 19a, 19b) for deployment or retraction thereof, a relative displacement between the first and second movable high lift surfaces (17a, 17b; 19a, 19b) by detecting a displacement or position value of the first assembly component (41) relative to the second assembly component (43).

10. Method according to claim 9,
**characterized in that** the method includes detecting a failure in and/or monitoring integrity of a drive load path (P) associated with the first and/or second high lift surface (17a, 17b; 19a, 19b).

11. Method according to claim 9 or 10,
**characterized in that** the method includes evaluating (S3, S4a; S3, S4b) the detected displacement or position value and, on the basis of the evaluation of the detected displacement or position value, generating (S5a; S5b) a signal indicating the presence or absence of a failure case, in particular a failure case of jamming of the first and/or second high lift surface (17a, 17b; 19a, 19b), skew of the first and/or second high lift surface (17a, 17b; 19a, 19b), disconnection in the drive load path (P) associated with the first and/or second high lift surface (17a, 17b; 19a, 19b), and/or freewheeling of a drive unit (60) associated with the first and/or second high lift surface (17a, 17b; 19a, 19b).

12. Method according to any one of claims 9 to 11,
**characterized in that** the method includes comparing the detected displacement or position value of the first assembly component (41) relative to the second assembly component (43) with a pre-defined nominal value and in particular **in that** the method includes comparing the detected displacement or position value of the first assembly component (41) relative to the second assembly component (43) with a nominal value provided by a pre-defined nominal curve.

13. Method according to claim 12,
**characterized in that** the method includes evaluating the displacement or position value by forming a difference of the displacement or position value and the nominal value, and generating a signal indicating a failure if the difference reaches and/or exceeds a threshold value.

14. Method according to claim 13,
**characterized in that** the threshold value varies across the operating stroke of the high lift system (13), in particular the stroke of the high lift surfaces (17, 19), and/or with a configuration of the aircraft (1) and/or **in that** the method includes adapting the threshold value depending on actual air speed or ground speed and/or **in that** the method includes adapting the threshold value depending on an environmental event, for example a gust or a taxiway or runway corrugation.

15. Method according to any one of claims 9 to 14,
**characterized in that** the method includes detecting a left-side displacement or position value using a left-side interconnecting assembly (37) connecting high lift surfaces (17a, 17b; 19a, 19b) of a left wing (7) of the aircraft (1), detecting a right-side displacement or position value using a right-side interconnecting assembly (37) connecting high lift surfaces (17a, 17b; 19a, 19b) of a right wing (7) of the aircraft (1), and comparing the left-side and right-side displacement or position values.
